# EUROPEAN PATENT SPECIFICATION

(11) **EP 2 480 045 B1**
(45) Date of publication and mention of the grant of the patent: **08.04.2015**
(21) Application number: 11290014.7
(22) Date of filing: 13.01.2011
(51) Int. Cl.: H04W 88/16

(54) **Arrangement for providing functions of a mobile IP-CAN gateway and use of such arrangement for offloading traffic from said mobile IP-CAN**
Anordnung zur Bereitstellung von Funktionen eines mobilen IP-CAN-Gateways und Verwendung solch einer Anordnung zur Verkehrsentlastung von besagtem mobilen IP-CAN
Agencement pour la fourniture de fonctions d'une passerelle IP-CAN mobile et utilisation d'un tel agencement pour décharger le trafic dudit IP-CAN mobile

(43) Date of publication of application: 25.07.2012
(73) Proprietor: ALCATEL LUCENT, 92100 Boulogne-Billancourt (FR)
(72) Inventor: D'Souza, Plavin, Thornhill L3T 6Y9 Ontario (CA); Foster, Lindsay, Calgary T3H 5M4 Alberta (CA); Thiebaut, Laurent, 91620 Nozay (FR); Henderickx, Wim, 2260 Westerlo (BE)
(74) Representative: El Manouni, Josiane

(56) References cited:
- WO-A2-2010/121771
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.2.0, 14 September 2010 (2010-09-14) , pages 1-44, XP050442062, [retrieved on 2010-09-14]
- SAMSUNG: "Fix LIPA open issues", 3GPP DRAFT; S2-102386_F, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434555, [retrieved on 2010-05-04]
- ALCATEL-LUCENT ET AL: "Restructuration of TR 23.829", 3GPP DRAFT; S2-101719 WAS 1449_23829 RESTRUCTURING_R0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 25 February 2010 (2010-02-25), XP050434102, [retrieved on 2010-02-25]

## Description

The present invention generally relates to communication networks and systems.

Descriptions of communication networks and systems, such as in particular mobile communication networks and systems, can be found in the literature, such as in particular in Technical Specifications published by standardization bodies such as for example 3GPP (3^{rd} Generation Partnership Project).

In such systems, a terminal or User Equipment UE has access to communication services via an Access Network.

An example of Access Network is the IP Connectivity Access Network (IP-CAN) providing IP connectivity services, including providing IP connectivity between an UE and an external IP network. Examples of external IP networks include public Internet, Intranet, operator's IP network...etc. Examples of 3GPP IP-CAN include GPRS (specified in particular in 3GPP TS 23.060) and Evolved Packet System EPS (specified in particular in 3GPP TS 23.401). Usually, IP connectivity services are provided by a Packet Core Network (for example GPRS Core Network, Evolved Packet Core EPC), accessed via a Radio Access Network (for example GERAN/UTRAN, E-UTRAN). Packet Core Network nodes in particular include a Gateway (for example GGSN in GPRS Core Network, P-GW in Evolved Packet Core EPC) interfacing with the external IP network, and providing a number of functions some of which requiring interaction with other network entities (such as subscriber database, charging entities, policy control entities...etc.).

Standardization of such networks and systems is evolving, in particular to introduce new technologies and/or functionalities.

An example of such new technologies is femtocell, specified in particular in 3GPP TS 25.467 for UTRAN and in 3GPP TS 36.300 for E-UTRAN. The femtocell technology introduces a new equipment called HNB (Home Node B) for UTRAN or HeNB for E-UTRAN. H(e)NB is a Customer-premises equipment that connects a 3GPP UE over (E)UTRAN wireless interface to a mobile operator's network using a broadband IP backhaul.

An example of such new functionalities is traffic offload, enabling more optimized routing or handling of data traffic. An example is the LIPA (Local IP Access) functionality introduced in GPRS (3GPP TS 23.060) and in EPC (3GPP TS 23.401). The LIPA functionality enables an IP capable UE connected via a H(e)NB to access other IP capable entities in the same residential/enterprise IP network without the user plane traversing the mobile operator's network except H(e)NB subsystem. Another example is the SIPTO (Selected IP Traffic Offload) functionality, enabling an operator to offload certain types of traffic at a network node close to that UE's point of attachment to the access network.

Documents 3GPP 23.829 V1.2.0 (2010-08) and 3GPP TSG SA WG2 Meeting #79 TD S2-102386 provide technological background.

There is a need to improve such functionalities, such as for example traffic offload, in particular to bring more benefits for operators and/or for users. Embodiments of the present invention in particular address such needs.

These and other objects are achieved, in one aspect, in an embodiment, by an arrangement for providing functions of a mobile IP-CAN gateway, said arrangement comprising:
- a first gateway node, a second gateway node, and an interface between said first and second gateway nodes,
- said first and second gateway nodes linked by said interface arranged to appear to the mobile IP-CAN and to an external IP network as a mobile IP-CAN gateway interfacing said mobile IP-CAN with said IP network,
- said first gateway node, located in said mobile IP-CAN, arranged to provide those traffic handling functions of said mobile IP-CAN gateway, referred to as first traffic handling functions, which are related with the termination of the interface of said mobile IP-CAN gateway towards said mobile IP-CAN,
- said second gateway node, located in a fixed IP-CAN, arranged to provide those traffic handling functions of said mobile IP-CAN gateway, referred to as second traffic handling functions, which are not related with the termination of the interface of said mobile IP-CAN gateway towards said mobile IP-CAN.

These and other objects are achieved, in another aspect, in an embodiment, by a method for offloading traffic from a mobile IP-CAN using such arrangement, said method comprising the steps of:
- said first gateway node receiving subscriber identification information, as part of said first traffic handling functions,
- said first gateway node sending said subscriber identification information to said second gateway node on said interface between said first and second gateway nodes,
- based on said subscriber identification information, said second gateway node obtaining associated subscriber profile information,
- said second gateway node providing said second traffic handling functions, based on said subscriber profile information.

These and other objects are achieved, in other aspects, by entities for performing such method, said entities including: first gateway node (such as for example Local Gateway L-GW), second gateway node (such as for example BNG).

Some embodiments of apparatus and/or methods in accordance with embodiments of the present invention are now described, by way of example only, and with reference to the accompanying drawings, in which:
- Figure 1 is intended to illustrate a possible solution for offloading traffic from a mobile IP-CAN, having some drawbacks that functionalities such as for example the LIPA functionality enable to avoid,
- Figure 2 is intended to illustrate a possible solution for offloading traffic from a mobile IP-CAN using for example the LIPA functionality, having some drawbacks that embodiments of the present invention enable to avoid,
- Figure 3 is intended to illustrate such drawbacks of a solution such as illustrated for example in figure 2,
- Figure 4 is intended to illustrate an arrangement for providing functions of a mobile IP-CAN gateway, used for offloading traffic from a mobile IP-CAN, according to an embodiment of the present invention,
- Figure 5 is intended to illustrate some signaling exchanged in an arrangement such as for example as illustrated in figure 4, according to an embodiment of the present invention.

With the very rapid growth of mobile data traffic, operators are looking for ways to reduce the cost/bit associated with such traffic. They are especially looking for ways (e.g. SIPTO) to offload traffic sent over 3gpp radio and primarily destined for the Internet in order to achieve the following:
1) Requirement-1): Avoid/minimize mobile data transiting the operator core IP network towards the centralized PGW/GGSN when possible to minimize transport/core network costs.
2) Requirement-2): Minimize the cost of PGW/GGSN and possibly avoid use of PGW/GGSN to handle such mobile data traffic.
3) Requirement-3): Enable mobile data traffic to be handled by the same IP level entities as the IP traffic of Wireline users. This allows Fixed-Mobile Convergent operators (operators supporting both Wireline and Wireless services) to
   ■ Provide so-called Quadruple play services
   ■ Put in common (between Wireline and Wireless users) support of IP features such as Firewall (FW)/NAT , nodes to support locally Peer to Peer, parental control, content caching (for downloads with smaller delays and lower transmission costs), header enrichment, content resizing, ...
   Requirement-3) applies only for mobile operators who also have a good Wireline service infrastructure.
   Requirement-1) is fulfilled by locating (smaller) decentralized PGW/GGSN in the aggregation network. However such deployment does not fulfil requirement 2) as putting more (smaller) PGW/GGSN reduces the pooling effect of big data centers and is likely to increase the CAPEX associated with nodes that handle such mobile data traffic.

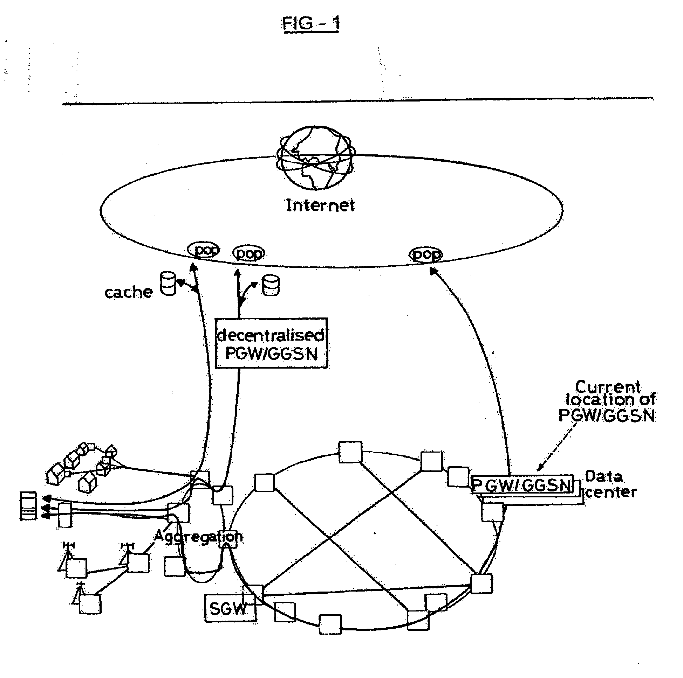

This solution is illustrated in figure 1.

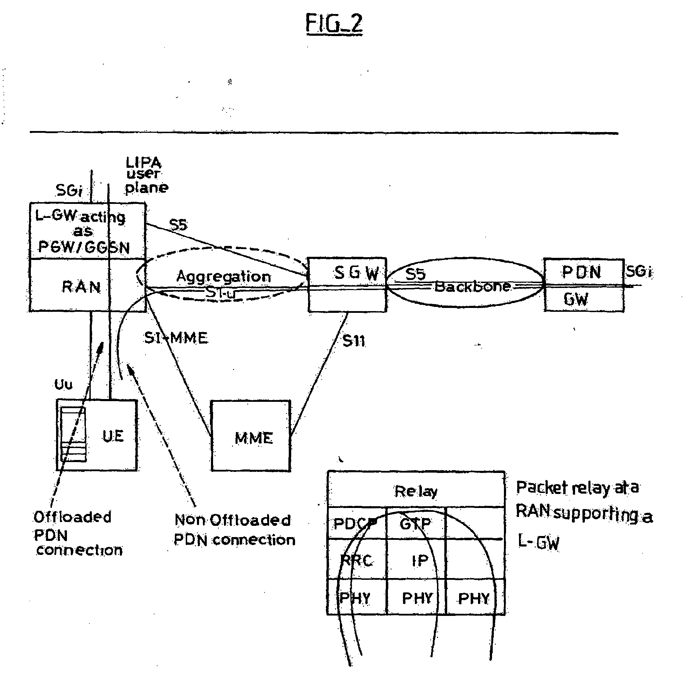

This is why 3gpp has defined the LIPA/SIPTO feature and especially the LIPA in the RAN feature (defined in 23.401 and 23.060) that has following main features:
■ A Local GW (L-GW) co-located with the RAN (H(e)NB in 3gpp Rel10) acts as a PGW/GGSN (thus terminating S5/Gn towards the Core).
■ The mobile data user plane does not traverse the mobile operator's network except the RAN as it is locally switched in the RAN between
   o The HENB function and the co-located PGW when the RAN corresponds to ERAN/LTE
   o The HNB (RNC) function and the co-located PGW/GGSN when the RAN corresponds to UTRAN/W-CDMA
■ The control of Mobile Data access is kept in MME (for LTE) / SGSN (for UTRAN)
■ (when a PDN connection / PDP context is to be (re-)established for an UE) MME/SGSN allocate a L-GW to support a PGW/GGSN function for this PDN connection / PDP context based on
   o L-GW address received from the RAN over S1/lu
   o APN rights for LIPA received from HSS/HLR
■ The PDN connection / PDP context is released when the UE moves out of the area served by the RAN that hosts the L-GW
This solution is illustrated in figure 2.

This architecture allows the following:
1) Mobile data traffic does not to have to go over the backbone of the operator towards the centralized data centers of the operator because the data is locally switched in the RAN. This brings transmission cost reduction and fulfills Requirement-1).
2) The cost of PGW/GGSN is reduced as there is no more a PGW/GGSN node (the PGW/GGSN function is integrated in the RAN). This fulfills Requirement-2).

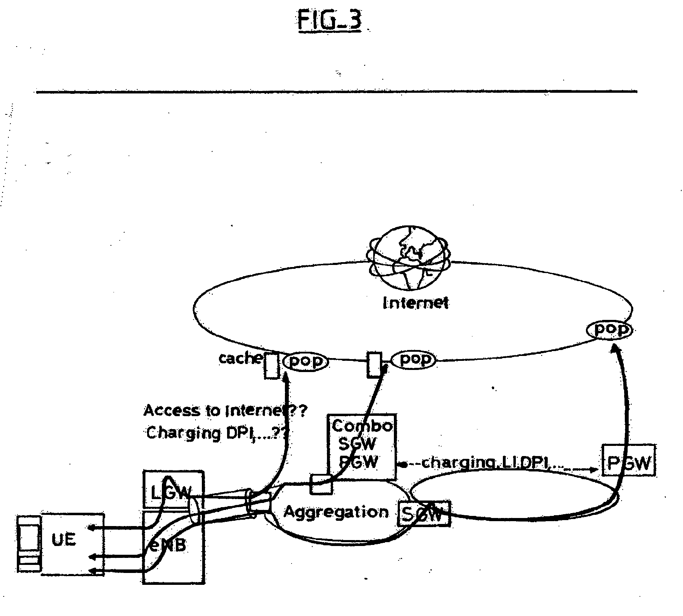

On the other hand it has the following drawbacks
■ The architecture currently defined in 3gpp Rel10, provides support for LIPA in the RAN but not for SIPTO in the RAN.
■ The PGW/GGSN functions have to be fulfilled by the RAN leading to either
   ■ Complex Software/Hardware to be redone in RAN nodes that may be very different in nature (ENB, femto 3G cells, fairly central RNC). Furthermore it leads to expose/terminate the various interfaces of the PGW/GGSN on the RAN nodes which may bring scaling issues for the nodes dealing with charging, Legal Intercept (LI), etc....
   ■ Or loss of important functionalities, if the L-GW supports only a minimalistic sub-set of existing PGW/GGSN features.
■ Thus, following features are not likely to be supported by the L-GW and not apply to offloaded mobile data traffic: off-line charging, On-line charging, traffic/usage metering to enforce subscribed limits on the maximum amount of traffic sent over the radio per hour/day/month/, Legal Intercept (LI), Downlink AMBR enforcement & IP QoS over the backhaul, Deep packet Inspection (DPI),...
This drawback is illustrated in figure 3.

In an embodiment, it is proposed that the LIPA/SIPTO in the RAN is deployed with the PGW/GGSN functions split between the L-GW in the RAN and a BNG already deployed for the Wireline IP service:
■ For SIPTO in the RAN, the same feature than LIPA in the RAN are used:
   o A Local GW (L-GW) co-located with the RAN acts as a PGW/GGSN (thus terminating S5/Gn towards the Core).
   o The mobile data user plane does not traverse the mobile operator's network except the RAN as it is locally switched in the RAN between
      ■ The ENB function and the co-located PGW when the RAN corresponds to ERAN/LTE
      ■ The RNC function and the co-located PGW/GGSN when the RAN corresponds to UTRAN/W-CDMA
   o The control of Mobile Data access is kept in MME (for LTE) / SGSN (for UTRAN)
   o (when a PDN connection / PDP context is to be (re-)established for an UE) MME/SGSN allocate a L-GW to support a PGW/GGSN function for this PDN connection / PDP context based on
      ■ L-GW address received from the RAN over S1/lu
      ■ APN rights for LIPA or SIPTO received from HSS/HLR
   o The PDN connection / PDP context is released when the UE moves out of the area served by the RAN that hosts the L-GW
   o SIPTO in the RAN may be provided over RAN nodes that are not HNB/HENB. In that case, to avoid too frequent allocation / release of a L-GW, the MME/SGSN may implement an algorithm to apply SIPTO in the RAN only to fairly stationary users. As an example, the MME/SGSN may wait for an UE to have remained in a RAN during more than a predefined value to allocate in that RAN a L-GW as a PGW/GGSN for a PDN connection / PDP context for this UE.
■ For either LIPA or SIPTO in the RAN
   o The Local GW (L-GW) co-located with the RAN is mainly a signalling gateway that terminates GTP-C (S5/Gn) and defers to the BNG for the traffic features non related with termination of the radio interface
   o Upon PDN connection create / PDP context activation for a user, the L-GW requests an IP address from the BNG via a DHCP request that is modified to contain the identity (IMSI) of the user and that contains also the address of the L-GW. The BNG leverages both the subscription information associated with the identity (IMSI) of the user and the address of the L-GW to allocate a relevant IP address to this user.
   ο Downlink traffic targeting the UE is naturally routed via the L-GW in the RAN node as the BNG has allocated to the UE an IP address that takes into account the address of the L-GW.
   o Uplink traffic from the UE is also forwarded by the L-GW (in the RAN) via the BNG. This is ensured either because the BNG terminates the backhaul link of the RAN node or due to proper configuration of the IP routing tables of the RAN node (usage of a proper tunnelling for traffic not targeting a mobile Core node (SGW, SGSN, GGSN,...).
   o The BNG provides the traffic features not related with the termination of the radio interface: off-line charging, On-line charging, traffic/usage metering to enforce subscribed limits on the maximum amount of traffic sent over the radio per hour/day/month/, Legal Intercept, Downlink AMBR enforcement & IP QoS over the backhaul
   o The BNG provides such traffic features not related with the termination of the radio interface based on User subscription (as the user Id (IMSI) is communicated by the L-GW to the BNG).
   o When the PDN connection / PDP context is to be released, the L-GW communicates this information to the BNG via a DHCP release

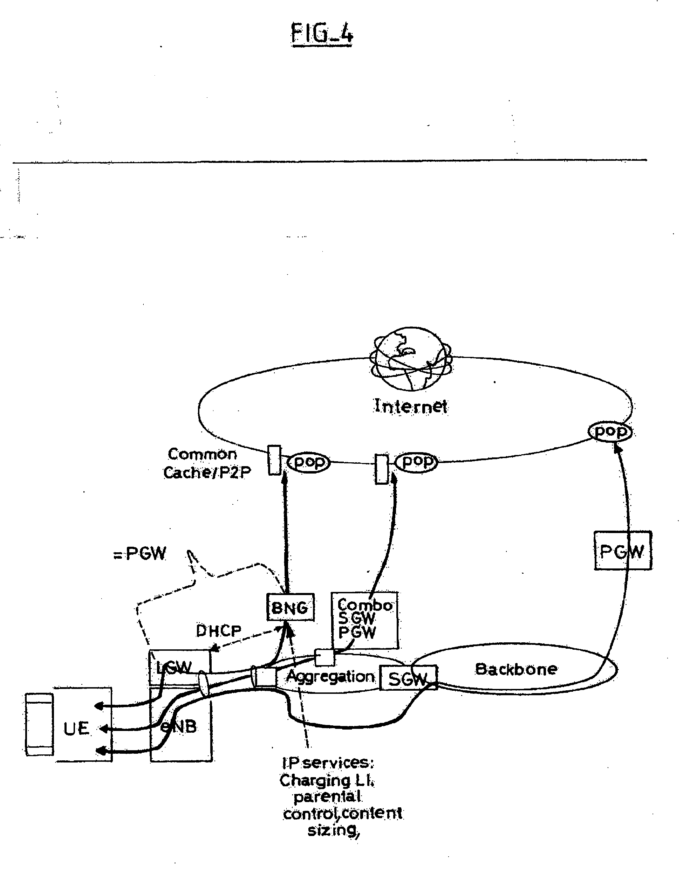

This solution is illustrated in figure 4.

This solution:
1. Allows to keep the L-GW as simple as possible
2. Leverages already deployed BNG to support packet handling functions (charging, LI,...) not fulfilled by the L-GW
3. Facilitates the deployment of common Wireline-Wireless IP services: Firewall (FW)/NAT , nodes to support locally Peer to Peer, parental control, content caching (for downloads with smaller delays and lower transmission costs), header enrichment, content resizing, ...
4. Limits the number of nodes interfacing the subscription data base / charging / Legal Intercept of the operator as one BNG may serve many L-GW (many RAN nodes)

In an embodiment, following points may be provided:
■ The addition of the IMSI in a DHCP request sent from L-GW to the BNG
■ The addition of the IMSI in a AAA request sent from the BNG to a AAA
■ The AAA server of a BNG gets subscription data associated with a mobile (IMSI) subscription. This may be realized by having the AAA server of the BNG having an interface to the mobile PCRF or being co-located with a mobile PCRF

Notes :
■ In this description the word "RAN" means any Radio Access Network but that actual deployment targets mainly the ENB and the 3G-UTRAN metro/femto cells (where the Node-B and RNC functions are co-located)
■ In this description the wording "MME/SGSN" means a node that supports the ME role, the SGSN role or both
■ Splitting a PGW/GGSN function between a L-GW in the RAN and a BNG is transparent for the rest of the Evolved Packet Core (MME/SGSN/SGW/HSS)
■ The BNG may be unaware of whether the RAN is 3G or LTE or whether the offload comes from a femto or from a macro RAN
■ To support SIPTO in the RAN with a L-GW, the MME or SGSN has to have a similar logic than for the support of LIPA in the RAN, i.e. to take into account the existence of a Local GW advertised by the RAN in the RAN to MME or SGSN signalling (over S1 or lu). This means that for a PDN connection or PDP context eligible to SIPTO, the MME or SGSN may enforce that the L-GW in the RAN is chosen as the PGW or GGSN that serves this PDN connection or PDP context. This also means that to support SIPTO in the RAN, a RAN node other than an HNB / HENB is able to advertise a L-GW capability via signalling sent to the Core (over lu/S1)

### A. Case where the L-GW (acting as a PGW/GGSN) receives a PDP context activation / PDN session create requests requiring an IPv4 address.

In an embodiment, following steps may be provided:
1. The L-GW in the RAN node receives a PDP context activation / PDN session create per the 3gpp LIPA feature. This request corresponds to a GTP-c (S5/Gn) message that contains the IMSI of the target mobile as well as the requested PDP type (an IP V4 or an IPv6 or both an IPv4 and an IPv6 are associated with this PDN connection). This request is fully compliant with 3gpp Rel8/Rel9/Rel10 specifications. The description below corresponds to the case where the UE requests an IPV4 address from the PGW/GGSN. Other cases are explained afterwards.
2. The L-GW fetches the IMSI in the request and sends a DHCP request containing this IMSI on its link towards the BNG. The type of DHCP request depends on the PDP type (request for IPV4/V6). In other words, in an embodiment, the IMSI is added in a DHCP request sent from L-GW to the BNG. Other parameters may also be added in the request such as the parameters sent by a PGW/GGSN in a Radius-Accounting message defined in 3gpp 29.061.
3. The BNG takes the IMSI in the DHCP request and sends a Radius request containing the IMSI to its AAA server.
4. The AAA server, based on the IMSI gets a (mobile) user profile that it transforms into a Wireline user profile that it sends to the BNG in a Radius Answer. Some parameters of this user profile may be the same for all the mobile users of a PLMN, and some parameters may be specific to the mobile user subscription.
5. The BNG takes care that an IP address is allocated to the user (i.e. serves the DHCP request coming from the L-GW). The range of this IP address may depend on the user profile received from the AAA server and/or on the L-GW address received in the DHCP request. This IP address allocation may be carried out locally or use the services of an external DHCP server.
6. The BNG terminates the DHCP protocol with the L-GW by providing the IP address having been allocated. The BNG creates an IP context that associates the IP address having been allocated with the subscription profile received from the AAA server. This context is controls charging, LI, QoS control (enforcement of the AMBR), DPI;... features to apply to the traffic having this IP address.
7. The LGW answers to the PDP context activation / PDN session create request (GTP-c (S5/Gn)) and provides the IP address allocated to the UE
8. Then the BNG provides the traffic features not related with the termination of the radio interface: off-line charging, On-line charging, traffic/usage metering to enforce subscribed limits on the maximum amount of traffic sent over the radio per hour/day/month/, Legal Intercept, Downlink AMBR enforcement & IP QoS over the backhaul,... based on User subscription information received from its AAA server. The BNG may use the other parameters received in the DHCP request (parameters sent by a PGW/GGSN in a Radius-Accounting message defined in 3gpp 29.061) to fulfil these tasks (e.g. to issue on-line charging / Off-line charging / Legal Intercept related interactions with the mobile Core)

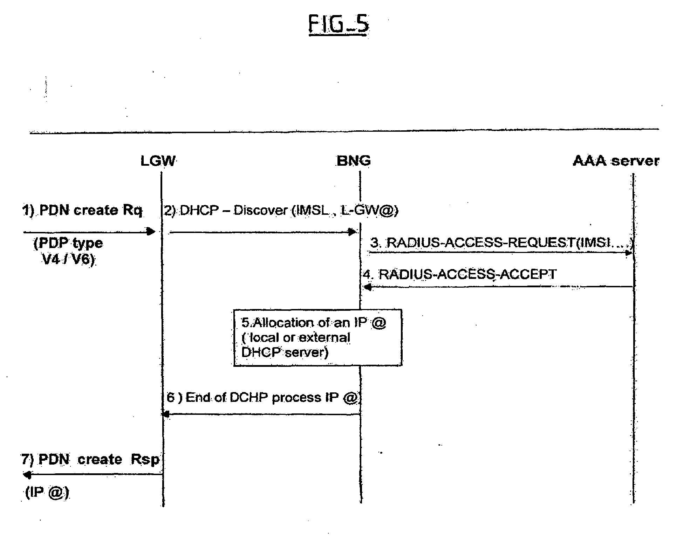

These steps are illustrated in figure 5.

### Other cases (UE request an IPv4 address via DHCP, IPv6)

### B. Case where the UE requests to get itself an IPv4 address via DHCP

In an embodiment, following steps may be provided:

When the UE does not get an IP address directly from the PGW/GGSN but uses DHCP (the DHCP client is in the UE), the L-GW answers directly to the PDP context activation request (*) without contacting the BNG. Then the L-GW acts as a DHCP relay (per RFC 2131 and RFC 1542) between the UE and the BNG. The DHCP relay in the L-GW needs to add the IMSI in the DHCP request sent to the BNG. The BNG behavior is then independent of whether the L-GW acts as a DHCP client or as a DHCP relay.
a. (*)The L-GW acts as a PGW/GGSN according to following text of 3gpp 23.060 [and 23.401]:The UE may indicate to the network within the Protocol Configuration Options element that it wants to obtain the IPv4 address with DHCPv4 as defined in RFC 2131. In that case, the GGSN [PGW] does not provide the IPv4 address for the UE as part of the PDP context activation procedures but sets the PDP address as 0.0.0.0. After the PDP Context establishment procedure is completed, the UE initiates the IPv4 address allocation by using DHCPv4"
*b. With regard to the L-GW behaviour,* the DHCP relay in the L-GW needs to add the IMSI in the DHCP request sent to the BNG. Other parameters may also be added in the DHCP request such as the parameters sent by a PGW/GGSN in a Radius-Accounting message defined in 3gpp 29.061

Apart from these precisions, this case works similarly with case A. above, especially for the bullets 3., 4., 5., 6., and 8.

### C. Case where the UE requests to get an IPv6 address via stateless address auto-configuration (SLAAC)

In an embodiment, following steps may be provided

In this case the L-GW maps the SLAAC signalling of the UE with DHCPv6 signalling to the BNG: When the L-GW receives a PDN session create / PDP context activation (from a SGW/SGSN), it translates this into a DHCPv6 request to the BNG. This DHCPv6 request contains at least (*) the IMSI of the UE. Once the L-GW has been allocated an IPv6 Prefix by the BNG (via DHCPv6 signalling where the L-GW acts as the DHCP client), the L-GW is responsible of the rest of the procedure of IPv6 Prefix allocation to the UE, i.e. to answer to the SGW/SGSN via GTP-c signalling containing the prefix that has been allocated (PDN session create / PDP context activation) and then of sending RA (Router Advertisement) to the UE, containing the Prefix that has been allocated.
(*). Other parameters may also be added in the DHCP request such as the parameters sent by a PGW/GGSN in a Radius-Accounting message defined in 3gpp 29.061

Apart from these precisions, this case works similarly with case A. above, especially for the bullets 3., 4., 5., 6., and 8.

In one aspect, in an embodiment, there is provided an arrangement for providing functions of a mobile IP-CAN gateway, said arrangement comprising:
- a first gateway node, a second gateway node, and an interface between said first and second gateway nodes,
- said first and second gateway nodes linked by said interface appearing to the mobile IP-CAN and to an external IP network as a mobile IP-CAN gateway interfacing said mobile IP-CAN with said IP network,
- said first gateway node, located in said mobile IP-CAN, providing those traffic handling functions of said mobile IP-CAN gateway, referred to as first traffic handling functions, which are related with the termination of the interface of said mobile IP-CAN gateway towards said mobile IP-CAN,
- said second gateway node, located in a fixed IP-CAN, providing those traffic handling functions of said mobile IP-CAN gateway, referred to as second traffic handling functions, which are not related with the termination of the interface of said mobile IP-CAN gateway towards said mobile IP-CAN.

In an embodiment:
- said mobile IP-CAN includes a Packet Core Network accessed via a Radio Access Network RAN,
- said first gateway node is co-located with said RAN.

In an embodiment:
- said first gateway node comprises a Local Gateway L-GW co-located with a Home Node B, or with a Home eNode B or with an ENB or with an UTRAN.

In an embodiment:
- said second gateway node comprises a Broadband Network Gateway BNG.

In an embodiment:
- said first traffic handling functions include functions performed by a P-GW on the S5 interface of Evolved Packet Core EPC, or by a GGSN on the Gn interface of GPRS Core Network, for terminating GTP-c and GTP-u protocols.

In an embodiment:
- said second traffic handling functions include at least one the functions of: charging, traffic usage metering, Lawful Intercept, QoS control, rate policing, Downlink AMBR enforcement, DPI.

In another aspect, there is provided a method for offloading traffic from a mobile IP-CAN using such arrangement, said method comprising, in an embodiment, the steps of:
- said first gateway node receiving subscriber identification information, as part of said first traffic handling functions,
- said first gateway node sending said subscriber identification information to said second gateway node on said interface between said first and second gateway nodes,
- based on said subscriber identification information, said second gateway node obtaining associated subscriber profile information,
- said second gateway node providing said second traffic handling functions, based on said subscriber profile information.

In an embodiment, said method comprises a step of:
- said second gateway node providing to said first gateway node an allocated IP address.

In an embodiment, said method comprises a step of:
- said second gateway node creating an IP context associating an allocated IP address with said subscription profile.

In an embodiment, said method comprises a step of:
- said second gateway node obtaining said subscription profile information from an AAA server associated with said second gateway node.

In an embodiment, said method comprises a step of:
- an AAA server associated with said second gateway node getting said subscription profile information via an interface with a PCRF associated with said mobile IP-CAN.

In an embodiment, said method comprises a step of:
- said first gateway adding the IMSI in a DHCP request sent by said first gateway node to said second gateway node.

In an embodiment, said method comprises a step of:
- said second gateway node taking the IMSI in a DHCP request received from said first gateway node and sending a Radius or Diameter request containing the IMSI to its AAA server.

In an embodiment:
- said traffic offload includes the user plane traffic not traversing the Packet Core Network of said IP-CAN.

In an embodiment:
- to avoid too frequent allocation / release of a Local Gateway L-GW, a Local Gateway L-GW is only allocated to an UE that has been detected as stationary, e.g. to an UE that has remained during more than a predefined delay in the RAN that is going to support the Local Gateway L-GW.

Other aspects relate to entities for such arrangement and/or entities for performing such method, said entities including: first gateway node (such as for example Local Gateway L-GW), second gateway node (such as for example BNG), entities interacting with first and/or second gateway nodes, such as AAA server associated with such second gateway node, ...etc.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
PGW: Packet Data Network Gateways such as defined in 3gpp 23.401.
GGSN: Gateway GPRS Support Nodes such as defined in 3gpp 23.060.
NAT: Network Address Translation, required e.g. when the terminal is allocated a private IP address
CAPEX: Capital Expenditure
LIPA/SIPTO: Local IP Access / Selective IP Traffic Offload
RAN: Radio Access Network such as the UTRAN or the ERAN (also called LTE).
ENB: Evolved Node-B (serving LTE coverage) as defined in 3gpp 36.300
MME: Mobility Management Entity such as defined in 3gpp 23.401.
SGSN: Serving GPRS Support Nodes such as defined in 3gpp 23.060
AMBR : Aggregate Maximum Bit Rate
BNG: Broadband Network Gateway such as defined in the WT-101 document of the BBF (Broadband Forum)
DHCP: Dynamic Host Configuration Protocol defined by IETF RFC such as in RFC 2131 IMSI: International Mobile Subscriber Identifier such as defined in 3gpp 23.003
PCRF: Policy and Charging Rules Function such as defined in 3GPP 23.203

## Claims

1. An arrangement for providing functions of a mobile IP-CAN gateway, said arrangement comprising:
- a first gateway node (L-GW), a second gateway node (BNG), and an interface between said first and second gateway nodes,
- said first and second gateway nodes linked by said interface arranged to appear to the mobile IP-CAN and to an external IP network (Internet) as a mobile IP-CAN gateway interfacing said mobile IP-CAN with said IP network,
- said first gateway node, located in said mobile IP-CAN, arranged to provide those traffic handling functions of said mobile IP-CAN gateway, referred to as first traffic handling functions, which are related with the termination of the interface of said mobile IP-CAN gateway towards said mobile IP-CAN,
- said second gateway node, located in a fixed IP-CAN, arranged to provide those traffic handling functions of said mobile IP-CAN gateway, referred to as second traffic handling functions, which are not related with the termination of the interface of said mobile IP-CAN gateway towards said mobile IP-CAN.

2. An arrangement according to claim 1, wherein:
- said mobile IP-CAN includes a Packet Core Network accessed via a Radio Access Network RAN,
- said first gateway node is co-located with said RAN.

3. An arrangement according to claim 1 or 2, wherein:
- said first gateway node comprises a Local Gateway L-GW co-located with a Home Node B, or with a Home eNode B or with an ENB (eNB) or with an UTRAN.

4. An arrangement according to any of claims 1 to 3, wherein:
- said second gateway node comprises a Broadband Network Gateway BNG.

5. An arrangement according to any of claims 1 to 4, wherein:
- said first traffic handling functions include functions performed by a P-GW (PGW) on the S5 interface of Evolved Packet Core EPC, or by a GGSN on the Gn interface of GPRS Core Network, for terminating GTP-c and GTP-u protocols.

6. An arrangement according to any of claims 1 to 5, wherein:
- said second traffic handling functions include at least one the functions of: charging, traffic usage metering, Lawful Intercept, QoS control, rate policing, Downlink AMBR enforcement, DPI.

7. A method for offloading traffic from a mobile IP-CAN using an arrangement according to any of claims 1 to 6, said method comprising the steps of:
- said first gateway node receiving subscriber identification information, as part of said first traffic handling functions,
- said first gateway node sending said subscriber identification information to said second gateway node on said interface between said first and second gateway nodes,
- based on said subscriber identification information, said second gateway node obtaining associated subscriber profile information,
- said second gateway node providing said second traffic handling functions, based on said subscriber profile information.

8. A method according to claim 7, comprising a step of:
- said second gateway node providing to said first gateway node an allocated IP address (IP@).

9. A method according to claim 7 or 8, comprising a step of:
- said second gateway node creating an IP context associating an allocated IP address with said subscription profile.

10. A method according to any of claims 7 to 9, comprising a step of:
- said second gateway node obtaining said subscription profile information from an AAA server (AAA server) associated with said second gateway node.

11. A method according to any of claims 7 to 10, comprising a step of:
- an AAA server associated with said second gateway node getting said subscription profile information via an interface with a PCRF associated with said mobile IP-CAN.

12. A method according to any of claims 7 to 11, comprising a step of:
- said first gateway adding the IMSI in a DHCP request (DHCP-DISCOVER) sent by said first gateway node to said second gateway node.

13. A method according to any of claims 7 to 12, comprising a step of:
- said second gateway node taking the IMSI (IMSI) in a DHCP request received from said first gateway node and sending a Radius or Diameter request (RADIUS-ACCESS-REQUEST) containing the IMSI to its AAA server.

14. A method according to any of claims 7 to 13, wherein:
- said traffic offload includes the user plane traffic not traversing the Packet Core Network of said IP-CAN.

15. A method according to any of claims 7 to 14, wherein:
- to avoid too frequent allocation / release of a Local Gateway L-GW, a Local Gateway L-GW is only allocated to an UE that has been detected as stationary, e.g. to an UE that has remained during more than a predefined delay in the RAN that is going to support the Local Gateway L-GW.

16. A first gateway node for an arrangement according to any of claims 1 to 6, said first gateway node comprising, for offloading traffic from a mobile IP-CAN using said arrangement:
- means for receiving subscriber identification information, as part of said first traffic handling functions,
- means for sending said subscriber identification information to said second gateway node on said interface between said first and second gateway nodes,

17. A first gateway node according to claim 16, comprising:
- means for adding the IMSI in a DHCP request (DHCP-DISCOVER) sent by said first gateway node to said second gateway node.

18. A second gateway node for an arrangement according to any of claims 1 to 6, said second gateway node comprising, for offloading traffic from a mobile IP-CAN using said arrangement:
- means for obtaining associated subscriber profile information, based on subscriber identification information received from said first gateway node,
- means for providing said second traffic handling functions, based on said subscriber profile information.

19. A second gateway node according to claim 18, comprising:
- means for providing to said first gateway node an allocated IP address (IP@).

20. A second gateway node according to claim 18 or 19, comprising:
- means for creating an IP context associating an allocated IP address with said subscription profile.

21. A second gateway node according to any of claims 18 to 20, comprising:
- means for obtaining said subscription profile information from an AAA server (AAA server) associated with said second gateway node.

22. A second gateway node according to any of claims 18 to 21, comprising:
- means for taking the IMSI (IMSI) in a DHCP request received from said first gateway node and sending a Radius or Diameter request (RADIUS-ACCESS-REQUEST) containing the IMSI to its AAA server.

## Patentansprüche

1. Anordnung zur Bereitstellung von Funktionen eines mobilen IP-CAN-Gateways, wobei die besagte Anordnung umfasst:
- Einen ersten Gateway-Knoten (L-GW), einen zweiten Gateway-Knoten (BNG) und eine Schnittstelle zwischen dem besagten ersten und dem besagten zweiten Gateway-Knoten,
- wobei der besagte erste und der besagte zweite Gateway-Knoten, welche über die besagte Schnittstelle miteinander vernetzt sind, dem mobilen IP-CAN und einem externen IP-Netzwerk (Internet) als ein mobiles IP-CAN-Gateway, welches das besagte IP-CAN an das besagte IP-Netzwerk koppelt, erscheinen,
- wobei der besagte erste Gateway-Knoten, welcher sich in dem besagten mobilen IP-CAN befindet, für die Bereitstellung derjenigen Verkehrsabwicklungsfunktionen des besagten mobilen IP-CAN-Gateways, bezeichnet als erste Verkehrsabwicklungsfunktionen, welche sich auf den Abschluss der Schnittstelle des besagten mobilen IP-CAN-Gateways zu dem besagten mobilen IP-CAN beziehen, ausgelegt ist,
- wobei der besagte zweite Gateway-Knoten, welcher sich in einem ortsfesten IP-CAN befindet, für die Bereitstellung derjenigen Verkehrsabwicklungsfunktionen des besagten mobilen IP-CAN-Gateways, bezeichnet als zweite Verkehrsabwicklungsfunktionen, welche sich nicht auf den Abschluss der Schnittstelle des besagten mobilen IP-CAN-Gateways zu dem besagten mobilen IP-CAN beziehen, ausgelegt ist.

2. Anordnung nach Anspruch 1, wobei
- das besagte mobile IP-CAN ein über ein Funkzugangsnetzwerk RAN zugängliches Paket-Kernnetzwerk umfasst,
- der besagte erste Gateway-Knoten in dem besagten RAN angeordnet ist.

3. Anordnung nach Anspruch 1 oder 2, wobei
- der besagte erste Gateway-Knoten ein lokales Gateway L-GW, welches an einem Heim-Knoten B, oder an einem Heim-eKnoten B, oder mit einem ENB (eNB), oder in einem UTRAN angeordnet ist, umfasst.

4. Anordnung nach einem beliebigen der Ansprüche 1 bis 3, wobei
- der besagte zweite Gateway-Knoten ein Breitbandnetzwerk-Gateway BNG umfasst.

5. Anordnung nach einem beliebigen der Ansprüche 1 bis 4, wobei
- die besagten ersten Verkehrsabwicklungsfunktionen Funktionen umfassen, die durch ein P-GW (PGW) auf der S5-Schnittstelle der Evolved Packet Core- bzw. EPC-Architektur, oder durch einen GGSN auf der Gn-Schnittstelle des GPRS-Kernnetzwerks zur Beendigung von GTP-c- und GTP-u-Protokollen ausgeführt werden.

6. Anordnung nach einem beliebigen der Ansprüche 1 bis 5, wobei
- die besagten zweiten Verkehrsabwicklungsfunktionen mindestens eine der folgenden Funktionen umfassen: Gebührenerfassung, Verkehrsnutzungs-Zählwerterfassung, legale Telekommunikationsüberwachung, QoS-Steuerung, Ratenüberwachung, Downlink-AMBR-Durchsetzung, DPI.

7. Verfahren zum Abstoßen von Verkehr von einem mobilen IP-CAN, welches eine Anordnung gemäß einem beliebigen der Ansprüche 1 bis 6 nutzt, wobei das besagte Verfahren die folgenden Schritte umfasst:
- Empfangen, an dem besagten ersten Gateway-Knoten, einer Teilnehmeridentifizierungsinformation als Teil der besagten ersten Verkehrsabwicklungsfunktionen,
- Senden, durch den besagten ersten Gateway-Knoten, der besagten Teilnehmeridentifizierungsinformation an den besagten zweiten Gateway-Knoten auf der besagten Schnittstelle zwischen dem besagten ersten und dem besagten zweiten Gateway,
- Basierend auf der besagten Teilnehmeridentifizierungsinformation, Einholen, durch den besagten zweiten Gateway-Knoten, einer assoziierten Teilnehmerprofilinformation,
- Bereitstellen, durch den besagten zweiten Gateway-Knoten, der besagten zweiten Verkehrsabwicklungsfunktionen auf der Basis der besagten Teilnehmerprofilinformation.

8. Verfahren nach Anspruch 7, den folgenden Schritt umfassend:
Bereitstellen, durch den besagten zweiten Gateway-Knoten, einer zugewiesenen IP-Adresse (iP@).

9. Verfahren nach Anspruch 7 oder 8, den folgenden Schritt umfassend:
- Erstellen, durch den besagten zweiten Gateway-Knoten, eines IP-Kontextes, welcher eine zugewiesene IP-Adresse mit dem besagten Teilnehmerprofil assoziiert.

10. Verfahren nach einem beliebigen der Ansprüche 7 bis 9, den folgenden Schritt umfassend:
- Einholen, durch den besagten zweiten Gateway-Knoten, der besagten Teilnehmerprofilinformation von einem mit dem besagten zweiten Gateway-Knoten assoziierten AAA-Server (AAA-Server).

11. Verfahren nach einem beliebigen der Ansprüche 7 bis 10, den folgenden Schritt umfassend:
- Erhalten, an einem mit dem besagten zweiten Gateway-Knoten assoziierten AAA-Server, der besagten Teilnehmerprofilinformation über eine Schnittstelle mit einer mit dem besagten mobilen IP-CAN assoziierten PCRF.

12. Verfahren nach einem beliebigen der Ansprüche 7 bis 11, den folgenden Schritt umfassend:
- Hinzufügen, durch das besagte erste Gateway, der IMSI in einer von dem besagten ersten Gateway-Knoten an den besagten zweiten Gateway-Knoten gesendeten DHCP-Anforderung (DHCP-DISCOVER).

13. Verfahren nach einem beliebigen der Ansprüche 7 bis 12, den folgenden Schritt umfassend:
- Übernehmen, durch den besagten zweiten Gateway-Knoten, der IMSI (IMSI) in einer von dem besagten ersten Gateway-Knoten empfangenen DHCP-Anforderung, und Senden einer Radius- oder Diameter-Anforderung (RADIUS-ACCESS-REQUEST), welche die IMSI enthält, an seinen AAA-Server.

14. Verfahren nach einem beliebigen der Ansprüche 7 bis 13, wobei
- das besagte Abstoßen von Verkehr einschließt, dass der Verkehr der Benutzerebene nicht durch das Paket-Kernnetzwerk des besagten IP-CAN fließt.

15. Verfahren nach einem beliebigen der Ansprüche 7 bis 14, wobei
- um eine zu häufige Zuweisung / Freigabe eines lokalen Gateways L-GW zu vermeiden, das lokale Gateway L-GW nur einem Benutzerendgerät, welches als stationär erkannt wurde, d.h. einem Benutzerendgerät, welches sich länger als eine vordefinierte Dauer in dem RAN, welches das lokale Gateway L-GW unterstützen wird, aufgehalten hat, zugewiesen wird.

16. Erster Gateway-Knoten für eine Anordnung gemäß einem beliebigen der Ansprüche 1 bis 6, wobei der besagte erste Gateway-Knoten zum Abstoßen von Verkehr von einem mobilen IP-CAN, welches die besagte Anordnung nutzt, umfasst:
- Mittel zum Empfangen einer Teilnehmeridentifizierungsinformation als Teil der besagten Verkehrsabwicklungsfunktionen,
- Mittel zum Senden der besagten Teilnehmeridentifizierungsinformation an den besagten zweiten Gateway-Knoten auf der besagten Schnittstelle zwischen dem besagten ersten und dem besagten zweiten Gateway-Knoten.

17. Erster Gateway-Knoten nach Anspruch 16, umfassend
- Mittel zum Hinzufügen der IMSI in einer von dem besagten ersten Gateway-Knoten an den besagten zweiten Gateway-Knoten gesendeten DHCP-Anforderung (DHCP-DISCOVER).

18. Zweiter Gateway-Knoten für eine Anordnung gemäß einem beliebigen der Ansprüche 1 bis 6, wobei der besagte zweite Gateway-Knoten zum Abstoßen von Verkehr von einem mobilen IP-CAN, welches die besagte Anordnung nutzt, umfasst:
- Mittel zum Einholen von assoziierten Teilnehmerprofilinformationen auf der Basis der von dem besagten ersten Gateway-Knoten empfangenen Teilnehmeridentifizierungsinformation,
- Mittel zum Bereitstellen der besagten zweiten Verkehrsabwicklungsfunktionen auf der Basis der besagten Teilnehmerprofilinformation.

19. Zweiter Gateway-Knoten nach Anspruch 18, umfassend Mittel zum Bereitstellen einer zugewiesenen IP-Adresse (IP@) an den besagten ersten Gateway-Knoten.

20. Zweiter Gateway-Knoten nach Anspruch 18 oder 19, umfassend:
- Mittel zum Erstellen eines IP-Kontextes, welcher eine zugewiesene IP-Adresse mit dem besagten Teilnehmerprofil assoziiert.

21. Zweiter Gateway-Knoten nach einem beliebigen der Ansprüche 18 bis 20, umfassend:
- Mittel zum Einholen der besagten Teilnehmerprofilinformation von einem mit dem besagten zweiten Gateway-Knoten assoziierten AAA-Server (AAA-Server).

22. Zweiter Gateway-Knoten nach einem beliebigen der Ansprüche 18 bis 21, umfassend:
- Mittel zum Übernehmen der IMSI (IMSI) in einer von dem besagten ersten Gateway-Knoten empfangenen DHCP-Anforderung, und zum Senden einer Radius- oder Diameter-Anforderung (RADIUS-ACCESS-REQUEST), welche die IMSI enthält, an seinen AAA-Server.

## Revendications

1. Agencement permettant de fournir les fonctions d'une passerelle IP-CAN mobile, ledit agencement comprenant :
- un premier noeud de passerelle (L-GW), un deuxième noeud de passerelle (BNG), et une interface entre lesdits premier et deuxième noeuds de passerelle,
- lesdits premier et deuxième noeuds de passerelle liés par ladite interface agencés pour apparaître au réseau IP-CAN mobile et à un réseau IP externe (Internet) comme une passerelle IP-CAN mobile assurant l'interface entre ledit réseau IP-CAN mobile et ledit réseau IP,
- ledit premier noeud de passerelle, situé dans ledit réseau IP-CAN mobile, agencé pour fournir celles des fonctions de traitement de trafic de ladite passerelle IP-CAN mobile, appelées premières fonctions de traitement du trafic, qui sont liées à la terminaison de l'interface de ladite passerelle IP-CAN mobile en direction dudit réseau IP-CAN mobile,
- ledit deuxième noeud de passerelle, situé dans un réseau IP-CAN fixe, agencé pour fournir celles des fonctions de traitement de trafic de ladite passerelle IP-CAN mobile, appelées deuxièmes fonctions de traitement de trafic, qui ne sont pas liées à la terminaison de l'interface de ladite passerelle IP-CAN mobile en direction dudit réseau IP-CAN mobile.

2. Agencement selon la revendication 1, dans lequel :
- ledit réseau IP-CAN mobile comprend un réseau coeur paquets accessible par l'intermédiaire d'un réseau d'accès radio RAN,
- ledit premier noeud de passerelle est co-localisé avec ledit RAN.

3. Agencement selon la revendication 1 ou 2, dans lequel :
- ledit premier noeud de passerelle comprend une passerelle locale L-GW co-localisée avec un noeud B domestique ou avec un noeud B évolué domestique ou avec un ENB (eNB) ou avec un UTRAN.

4. Agencement selon l'une quelconque des revendications 1 à 3, dans lequel :
- ledit deuxième noeud de passerelle comprend une passerelle de réseau à large bande BNG.

5. Agencement selon l'une quelconque des revendications 1 à 4, dans lequel :
- lesdites premières fonctions de traitement de trafic comprennent des fonctions exécutées par une P-GW (PGW) sur l'interface S5 d'un réseau coeur EPC ou par un GGSN sur l'interface Gn d'un réseau coeur GPRS, pour terminer des protocoles GTP-c et GTP-u.

6. Agencement selon l'une quelconque des revendications 1 à 5, dans lequel
- lesdites deuxièmes fonctions de traitement de trafic comprennent au moins une des fonctions suivantes : facturation, mesure d'utilisation du trafic, interception légale, contrôle de la qualité de service, régulation du débit, application de l'AMBR de liaison descendante, DPI.

7. Procédé pour délester le trafic à partir d'un réseau IP-CAN mobile au moyen d'un agencement selon l'une quelconque des revendications 1 à 6, ledit procédé comprenant les étapes suivantes :
- ledit premier noeud de passerelle reçoit des informations d'identification d'abonné, comme partie desdites premières fonctions de traitement de trafic,
- ledit premier noeud de passerelle envoie lesdites informations d'identification d'abonné audit deuxième noeud de passerelle sur ladite interface entre lesdits premier et deuxième noeuds de passerelle,
- sur la base desdites informations d'identification d'abonné, ledit deuxième noeud de passerelle obtient des informations de profil d'abonné associées,
- ledit deuxième noeud de passerelle fournit lesdites deuxièmes fonctions de traitement de trafic, sur la base desdites informations de profil d'abonné.

8. Procédé selon la revendication 7, comprenant l'étape suivante :
- ledit deuxième noeud de passerelle fournit audit premier noeud de passerelle une adresse IP allouée (IP@).

9. Procédé selon la revendication 7 ou 8, comprenant l'étape suivante :
- ledit deuxième noeud de passerelle crée un contexte IP associant une adresse IP allouée audit profil d'abonné.

10. Procédé selon l'une quelconque des revendications 7 à 9, comprenant l'étape suivante :
- ledit deuxième noeud de passerelle obtient lesdites informations de profil d'abonné à partir d'un serveur AAA (serveur AAA) associé audit deuxième noeud de passerelle.

11. Procédé selon l'une quelconque des revendications 7 à 10, comprenant l'étape suivante :
- un serveur AAA associé audit deuxième noeud de passerelle obtient lesdites informations de profil d'abonné par l'intermédiaire d'une interface avec une PCRF associée audit réseau IP-CAN mobile.

12. Procédé selon l'une quelconque des revendications 7 à 11, comprenant l'étape suivante :
- ladite première passerelle ajoute l'IMSI dans une requête DHCP (DHCP-DISCOVER) envoyée par ledit premier noeud de passerelle audit deuxième noeud de passerelle.

13. Procédé selon l'une quelconque des revendications 7 à 12, comprenant l'étape suivante :
- ledit deuxième noeud de passerelle prend l'IMSI (IMSI) dans une requête DHCP provenant dudit premier noeud de passerelle et envoie une requête Radius ou Diameter (RADIUS-ACCESS-REQUEST) contenant l'IMSI à son serveur AAA.

14. Procédé selon l'une quelconque des revendications 7 à 13, dans lequel :
- ledit délestage de trafic inclut le fait que le trafic dans le plan usager ne traverse pas le réseau coeur paquets dudit réseau IP-CAN.

15. Procédé selon l'une quelconque des revendications 7 à 14, dans lequel :
- pour éviter une allocation/libération trop fréquente d'une passerelle locale L-GW, une passerelle locale L-GW est allouée uniquement à un UE qui a été détecté comme stationnaire, par exemple à un UE qui est resté pendant plus d'une durée prédéfinie dans le RAN qui va prendre en charge la passerelle locale L-GW.

16. Premier noeud de passerelle pour un agencement selon l'une quelconque des revendications 1 à 6, ledit premier noeud de passerelle comprenant, pour délester le trafic à partir d'un réseau IP-CAN mobile au moyen dudit agencement :
- des moyens pour recevoir des informations d'identification d'abonné, comme partie desdites premières fonctions de traitement de trafic,
- des moyens pour envoyer lesdites informations d'identification d'abonné audit deuxième noeud de passerelle sur ladite interface entre lesdits premier et deuxième noeuds de passerelle.

17. Premier noeud de passerelle selon la revendication 16, comprenant :
- des moyens pour ajouter l'IMSI dans une requête DHCP (DHCP-DISCOVER) envoyée par ledit premier noeud de passerelle audit deuxième noeud de passerelle.

18. Deuxième noeud de passerelle pour un agencement selon l'une quelconque des revendications 1 à 6, ledit deuxième noeud de passerelle comprenant, pour délester le trafic à partir d'un réseau IP-CAN mobile au moyen dudit agencement :
- des moyens pour obtenir des informations de profil d'abonné associées, sur la base des informations d'identification d'abonné provenant dudit premier noeud de passerelle,
- des moyens pour fournir lesdites deuxièmes fonctions de traitement de trafic, sur la base desdites informations de profil d'abonné.

19. Deuxième noeud de passerelle selon la revendication 18, comprenant :
- des moyens pour fournir audit premier noeud de passerelle une adresse IP allouée (iP@).

20. Deuxième noeud de passerelle selon la revendication 18 ou 19, comprenant :
- des moyens pour créer un contexte IP associant une adresse IP allouée audit profil d'abonné.

21. Deuxième noeud de passerelle selon l'une quelconque des revendications 18 à 20, comprenant :
- des moyens pour obtenir lesdites informations de profil d'abonné à partir d'un serveur AAA (serveur AAA) associé audit deuxième noeud de passerelle.

22. Deuxième noeud de passerelle selon l'une quelconque des revendications 18 à 21, comprenant :
- des moyens pour prendre l'IMSI (IMSI) dans une requête DHCP provenant dudit premier noeud de passerelle et envoyer une requête Radius ou Diameter (RADIUS-ACCESS-REQUEST) contenant l'IMSI à son serveur AAA.
